# EUROPEAN PATENT APPLICATION

(11) **EP 2 853 883 A1**
(43) Date of publication of application: **01.04.2015**
(21) Application number: 14184766.5
(22) Date of filing: 15.09.2014
(51) Int. Cl.: G01N 21/31, G06N 3/12, G06K 9/62

(54) **Genetic algorithm for grouping objects on the basis of their hyperspectral images**

(30) Priority: 16.09.2013 SE 1351058
(71) Applicant: UmBio AB, 904 22 Umea (SE)
(72) Inventor: Jonsson, Oskar, 904 22 Umeå (SE)
(74) Representative: Forsblom, Mattias Henrik

(57) **Abstract**

A method for determining an estimate of a grouping of a plurality of objects (104) into at least one group according to extent of relatedness of the objects is disclosed. A set of data of each of the plurality of objects is acquired or determined, wherein the set of data of each of the objects is based on spectral information of the object. Based on the set of data of each object, an initial estimate of the grouping of the plurality of objects is determined. Starting from the initial estimate of the grouping of the plurality of objects, at least one further estimate of the grouping of the plurality of objects is iteratively determined, until a difference between values of at least one fitness function based on an estimate of the grouping of the plurality of objects and a preceding estimate of the grouping of the plurality of objects complies with a selected criterion for change in the value of the at least one fitness function. The iterative determination of at least one further estimate of the grouping of the plurality of objects comprises, for a preceding estimate of the grouping of the plurality of objects, determining a statistical relation between the set of data of each of the objects and information relating to in which group each of the objects is included, determining a measure of goodness of the statistical relation, wherein the value of the at least one fitness function is based on the determined measure, and determining a new estimate of the grouping of the plurality of objects based on the value of the at least one fitness function.

## Description

### TECHNICAL FIELD

The present invention generally relates to methods and equipment for analyzing a plurality of samples or objects. More specifically, the present invention relates to a method and a processing module or the like for determining an estimate of a grouping of a plurality of objects or samples into at least one group according to extent or certainty of relatedness of the objects, or according to association between the objects, i.e. according to the extent to which different ones of the plurality of objects are associated.

### BACKGROUND

In many applications there is desired or required to measure and analyze whether the chemical content or chemical and/or physical characteristics of an object, product, or sample varies or deviates e.g. from reference value or range of values for the object, product or sample. Information or data relating to an object's or sample's chemical composition and/or physical characteristics or properties can be extracted for example by using spectral analysis. The use of spectral analysis for extracting data that allows for analyzing an object's chemical composition and physical properties is utilized in many applications. An example of a spectral analysis method is hyperspectral analysis, such as hyperspectral image analysis. Using hyperspectral image analysis, information relating e.g. to the chemical composition and/or physical properties of an object's or sample's surface can be obtained.

For example in forensic analysis and processes, use of spectral analysis may allow for streamlining and increasing the efficiency of the analysis and processing of substances, and also for reducing turnaround times. Examples of forensic application areas are identification of seized drugs, identification of fake products (e.g., foodstuffs, cigarettes, cosmetics), analysis of body fluids, e.g. blood or semen on fabric, analysis of forged checks and bills (currency). In forensic analysis and processes, a relatively quick screening of e.g. confiscated drugs in order to relatively quickly be able to detect and/or identify illegal substances without destroying the confiscated seizure or its packaging may be desired or required. After detection and/or identification of such illegal substances, they may subsequently be analyzed in more detail. Types of analysis in forensic applications which may be desired or required include, for example, comparative analysis (e.g., determining which samples of a plurality of samples are similar to each other or different from each other), finding relationships between and associating samples such as pills of the same type or origin, classification of samples based on chemical content, identification of type of drug, and measuring concentration of active substance (e.g., the fraction of a substance such as amphetamine in a powder). Similar types of analysis may be required or desired in applications other than forensic applications, for example in analysis of goods brought into and out of a country by customs authorities.

### SUMMARY

For example in analysis such as comparative analysis of samples or objects, such as analyzing which samples or objects of a plurality of samples or objects that are similar to each other/different from each other, it would be desirable to be able to objectively associate two or more samples or objects with each other or dissociate two or more samples or objects from each other, for example based on spectral information of the samples or objects extracted from data obtained from spectral analysis of the samples or objects. Preferably, this should be possible without requiring any previous knowledge or information of the samples or objects obtained in advance.

In view of the above, a concern of the present invention is to provide a method and an apparatus which based on spectral information of a plurality of samples or objects are capable of objectively associating two or more samples or objects with each other or dissociating two or more samples or objects from each other.

A further concern of the present invention is to provide a method and an apparatus which based on spectral information of a plurality of samples or objects are capable of objectively associating two or more samples or objects with each other or dissociating two or more samples or objects from each other, without requiring any prior knowledge or information about the samples or objects.

To address at least one of these concerns and other concerns, a method for determining an estimate of a grouping of a plurality of objects into at least one group according to extent of relatedness of the objects, and a processing module adapted to determine an estimate of a grouping of a plurality of objects into at least one group according to extent of relatedness of the objects in accordance with the independent claims are provided. Preferred embodiments are defined by the dependent claims.

In the context of the present invention, by a plurality of objects it is meant at least two objects, each of which in principle may be of any type of object, product or sample for which it is desired or required to analyze which objects of the plurality of objects that are similar to each other, or different from each other. The plurality of objects may for example include drugs, which for example may be in the form of pills, tablets, and/or capsules. In alternative or in addition, the plurality of objects may for example include, but are not limited to, foodstuffs, agricultural products, cigarettes, cosmetics, etc., or any combination thereof. Hence, in the context of the present application, the term "object" is to be interpreted broadly.

According to a first aspect, there is provided a method for determining an estimate of a grouping of a plurality of objects, or samples, into at least one group according to extent and/or certainty of relatedness of the objects. The number of objects included in the at least one group preferably equals the number of objects included in the plurality of objects. A set of data of each of the plurality of objects is acquired or determined, wherein the set of data of each of the objects is based on spectral information of the object. The spectral information of, or relating to, each object may for example include spectral information of at least one portion of the object, e.g. at least one surface portion of the object. Based on the set of data of each object, an initial estimate of the grouping of the plurality of objects is determined. Starting from the initial estimate of the grouping of the plurality of objects, at least one further or additional estimate of the grouping of the plurality of objects is iteratively determined, until a difference between a value of at least one fitness function based on an estimate of the grouping of the plurality of objects and a value of the at least one fitness function based on a preceding estimate of the grouping of the plurality of objects complies with a selected criterion for change in the value of the at least one fitness function. Hence, at least one additional estimate of the grouping of the plurality of objects in addition to the initial estimate of the grouping of the plurality of objects may be determined.

According to the first aspect, the iterative determination of at least one further estimate of the grouping of the plurality of objects comprises, for a preceding estimate of the grouping of the plurality of objects, determining a statistical relation between the set of data of each of the objects and information relating to in which group each of the objects is included. A measure of goodness, or a measure of fit, of the determined statistical relation is determined, wherein the value of the at least one fitness function is based on, or includes, or is derived from the determined measure. A new estimate of the grouping of the plurality of objects is determined based on the value of the at least one fitness function.

For the first iteration in the iterative determination, the preceding estimate of the grouping of the plurality of objects may be the initial estimate of the grouping of the plurality of objects.

In the context of the present application, by extent of relatedness of the objects it is meant e.g. extent of association between the objects, i.e. the extent to which different ones of the plurality of objects are associated, or the degree of certainty by which the different objects are associated, similar, and/or related. Hence, according to embodiments of the present invention, association or dissociation of a plurality of objects, for which there may be no prior information available beforehand, and e.g. may be of unknown type, can be estimated or determined utilizing spectral information of the objects. Spectral information of each of the plurality of objects may for example be acquired by means of a spectral imaging sensor adapted to capture at least one spectral image of the plurality of objects, which spectral imaging for example may include or be constituted by a hyperspectral imaging sensor or camera, and/or a spectrometer, e.g. based on a Fourier transform spectroscopy and/or Raman spectroscopy. The spectral information of the objects are utilized in an algorithm which in an iterative manner divides or groups the samples into one or more groups, or sets, and iteratively determines a measure, or index, based on data derived from spectral information of the objects indicating how accurate the grouping of the objects into the one or more groups by extent of relatedness of the objects is. Thus, the measure or index may indicate the extent to which the objects included in the respective groups defined by the determined grouping are associated (or dissociated), or the degree of certainty that the objects included in the respective groups defined by the determined grouping are associated (or dissociated).

According to embodiments of the present invention, spectral information of each of the plurality of objects can be acquired by means of in principle any appropriate spectral information acquirer, e.g. by means of a spectral imaging sensor adapted to capture at least one spectral image of the plurality of objects, which spectral imaging sensor for example may include or be constituted by a hyperspectral imaging sensor or camera. The acquiring of the spectral information of the objects may for example be carried out by at least momentarily moving the objects, which for example may be situated on a support such as a tray or the like, on a conveyor belt or the like while scanning or imaging the objects with the spectral imaging sensor. Any one of the objects may be scanned or imaged as is, or the object may possibly be packaged, e.g. in a plastic bag or the like. The objects may be moving or they may be temporarily immovable while they are scanned or imaged. The spectral information, or the measurement data, of each of the plurality of objects is conveyed, communicated or transmitted to a processor, processing module or the like. The spectral information or measurement data may for example be communicated to the processor by means of in principle any wireless and/or wired communication means as known in the art. Thereby, the processor or processing module can acquire a set of data of each of the plurality of objects, with the set of data of each of the objects being based on spectral information of the object. The set of data of each of the plurality of objects can for example be processed in the processor or processing module in accordance with a method according to the first aspect, or by means of a processing module according to the second aspect. Based on the determination of an estimate of a grouping of the plurality of objects into at least one group according to extent of relatedness of the objects, a signal may be generated, which signal may be indicative of the determined estimate. The signal may for example include a measure or index or the like which can be used to indicate e.g. to a user the extent to which the objects included in the respective groups defined by the determined grouping are associated (or dissociated), or the degree of certainty that the objects included in the respective groups defined by the determined grouping are associated (or dissociated). The generated signal may be transmitted to a user interface configured to indicate the estimate, or measure or index, to a user. Thereby, the user can be presented with information indicating for example whether two or more samples or objects are associated with each other, or whether the two or more samples or objects are dissociated from each other, whereby the user may be able to directly determine with which degree of certainty the two or more samples are associated with each other (or dissociated from each other). This may be particularly useful in so called comparative analysis, e.g. in forensic applications.

The indication by the user interface may for example be visual, auditory, tactile, or any combination thereof. The user interface may for example include or be constituted by a visual display unit.

According to a non-limiting example, the plurality of objects may for example include two types of objects, such as pills, tablets or capsules. In such a case, the algorithm when converged may indicate a grouping of the samples into two groups such that the two types of objects are dissociated from each other, i.e. such that each one of the two groups of objects only includes a single type of object, e.g. a single type of pill, tablet or capsule. Hence, the algorithm when converged may in that case indicate that the two identified groups of objects are dissociated from each other, i.e. that the objects in one of the groups are dissimilar from the objects in the other group. If the plurality of objects would include three types of objects, the algorithm when converged may in that case indicate three groups of objects which are dissociated from each other, i.e. that the objects in each of the groups are dissimilar or substantially dissimilar from the objects in the other groups, and so on. Similarly, if the plurality of objects would include a single type of objects or objects of similar type, the algorithm when converged may in that case indicate a single group of objects, i.e. that all of the objects are associated with each other.

Hence, by means of a method according to the first aspect, an estimate of a grouping of a plurality of objects, or samples, into at least one group, according to extent of relatedness of the objects, can be determined in an objective manner based on spectral information of the samples or objects. Thereby, it can be objectively assessed or estimated whether two or more samples or objects are associated with each other or whether the two or more samples or objects are dissociated from each other. No, or at least very little, prior knowledge or information of the samples or objects obtained in advance may be required. A method according to the first aspect may be useful for example in comparative analysis of samples or objects, such as analyzing which samples or objects of a plurality of samples or objects that are similar to each other/different from each other, which may be desirable or even required e.g. in certain forensic applications.

For the purpose of illustration of principles of embodiments of the present invention, the following example may be considered. First, starting from a candidate solution, i.e. an initial estimate of the grouping of the plurality of objects into at least one group or set, an optimization algorithm such as an evolutionary algorithm is utilized for generating a new, potential solution (or a plurality of new, potential solutions), i.e. further or additional estimates of the grouping of the plurality of objects (into at least one group), which is performed by means of comparing values of at least one fitness function in preceding and succeeding iterations of the algorithm, thereby iteratively improving the final (converged) solution, i.e. the final estimate of the grouping of the plurality of objects (into at least one group). For determination or generation of new, potential solutions, statistical relations between the set of data of each of the objects and information relating to in which group each of the objects is included are determined for each candidate solution (e.g. the solution(s) in each generation), and a measure of goodness or fit of the determined statistical relations are utilized as an objective function in the optimization algorithm.

A converged solution can be considered to be found when a difference between values of at least one fitness function based on preceding and succeeding estimates of the grouping of the plurality of objects complies with the selected criterion for change in the value of the at least one fitness function.

According to a second aspect, there is provided a processing module adapted to determine an estimate of a grouping of a plurality of objects into at least one group according to extent of relatedness of the objects. The processing module is adapted to acquire a set of data of each of the plurality of objects, wherein the set of data of each of the objects is based on spectral information of the object, and, based on the set of data of each object, determine an initial estimate of the grouping of the plurality of objects. The processing module is adapted to, starting from the initial estimate of the grouping of the plurality of objects, iteratively determine at least one further estimate of the grouping of the plurality of objects. Iterative determination is performed until a difference between a value of at least one fitness function based on an estimate of the grouping of the plurality of objects and a value of the at least one fitness function based on a preceding estimate of the grouping of the plurality of objects complies with a selected criterion for change in the value of the at least one fitness function.

According to the second aspect, the processing module is adapted to, in order to determine a new estimate of the grouping of the plurality of objects, determine a statistical relation between the set of data of each of the objects and information relating to in which group each of the objects is included for a preceding estimate of the grouping of the plurality of objects, determine a measure of goodness of the determined statistical relation, wherein the value of the at least one fitness function is based on the determined measure, and determine the new estimate of the grouping of the plurality of objects based on the value of the at least one fitness function.

A processing module according to the second aspect may allow for or facilitate assessment or estimation of whether two or more samples or objects are associated with each other, or whether the two or more samples or objects are dissociated from each other, while requiring only relatively little or even no special knowledge or experience of the user from examining spectral information of the objects e.g. in the form of spectral image(s) of the plurality of objects in order to identify and/or characterize the objects. Hence, aspects of the present invention described herein may allow for or facilitate providing an 'unsupervised' procedure or function for assessing or estimating whether two or more samples or objects are associated with each other, or whether the two or more samples or objects are dissociated from each other. According to embodiments of the present invention, by an "unsupervised" procedure it is meant that the procedure may require only little or even no 'manual' intervention or assessment by a user, which for example may involve the user himself/herself examining spectral information of the objects and comparing the spectral information with reference information e.g. in the form of data from so called spectral libraries.

In the context of the present application, by spectral information it is meant information from across at least one wavelength (or frequency) range or interval of the electromagnetic spectrum, or information at a plurality of wavelengths (or frequencies), collected from electromagnetic radiation reflected e.g. from a (surface) portion of an object or sample.

In the context of the present application, by a measure of goodness of a statistical relation between the set of data of each of the objects and information relating to in which group each of the objects is included, it is generally meant a measure of the accuracy of the statistical relation or how well the determined statistical relation will generalize to an independent data set, which measure e.g. may be based on or be constituted by a cross-validation coefficient or value.

According to a third aspect, there is provided a computer program product comprising computer-executable components for causing a processing module according to the second aspect to perform a method according to the first aspect when the computer-executable components are executed on the processing module.

According to a fourth aspect, there is provided a computer-readable digital storage medium comprising a computer program product comprising computer-executable components adapted to, when executed on a processing module according to the second aspect, cause the processing module to perform a method according to the first aspect.

Further objects and advantages of the present invention are described in the following by means of exemplifying embodiments.

It is noted that the present invention relates to all possible combinations of features recited in the claims. Further features of, and advantages with, the present invention will become apparent when studying the appended claims and the following description. Those skilled in the art realize that different features of the present invention can be combined to create embodiments other than those described in the following.

### BRIEF DESCRIPTION OF THE DRAWINGS

Exemplifying embodiments of the invention will be described below with reference to the accompanying drawings.
Figs. 1 and 2 are schematic views of systems in accordance with embodiments of the present invention.
Fig. 3 depicts, for the purpose of illustration of principles of embodiments of the present invention, an example of an initial estimate of the grouping of objects into two groups according to extent of relatedness of the objects.
Fig. 4 is a schematic view of computer-readable means carrying computer program code according to embodiments of the present invention.
Figs. 5 and 6 are schematic flow diagrams of methods according to embodiments of the present invention.

In the accompanying drawings, the same reference numerals denote the same or similar elements throughout the views.

### DETAILED DESCRIPTION

The present invention will now be described hereinafter with reference to the accompanying drawings, in which exemplifying embodiments of the present invention are shown. The present invention may, however, be embodied in many different forms and should not be construed as limited to the embodiments set forth herein; rather, these embodiments are provided by way of example so that this disclosure will convey the scope of the invention to those skilled in the art. The steps of any method disclosed herein do not have to be performed in the exact order as disclosed, unless explicitly stated so. Furthermore, like numbers refer to the same or similar elements or components throughout.

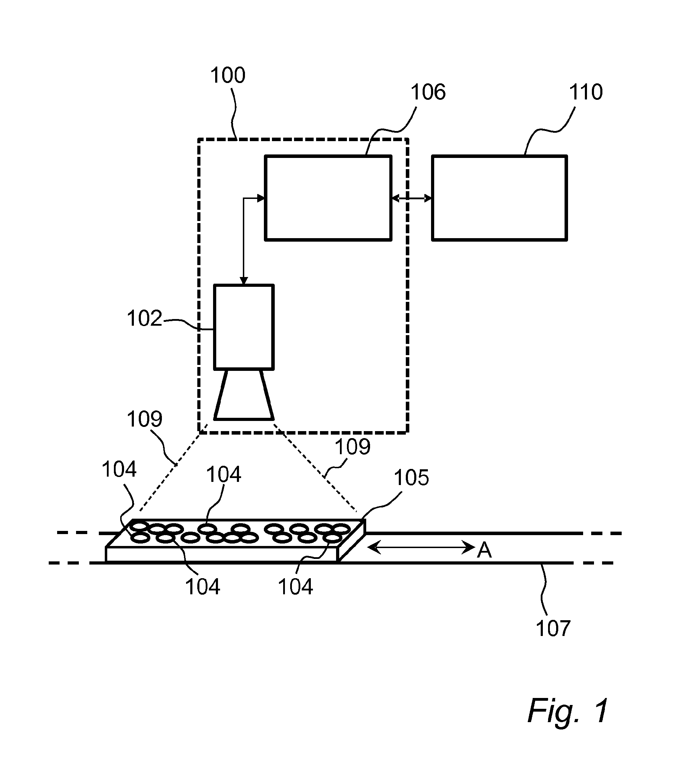

Referring now to Fig. 1, there is shown a schematic view of, among other things, a system 100 in accordance with an embodiment of the present invention.

The system 100 comprises a spectral information acquirer 102 which is adapted to acquire spectral information of each of a plurality of objects 104. In Fig. 1, only some of the objects 104 are indicated by reference numerals 104. The particular shape and size of the objects 104 illustrated in Fig. 1 are according to examples and are not to be considered as limiting the present invention. In principle any shape and size of the objects 104 are possible.

Spectral information of each of the plurality of objects 104, e.g. from the respective surfaces of the plurality of objects 104, may for example be acquired by means of a spectral imaging sensor which is adapted to capture at least one spectral image of the plurality of objects 104. The spectral imaging sensor may e.g. include or be constituted by a hyperspectral imaging sensor or camera. In alternative or in addition, spectral information of each of the plurality of objects 104 may be acquired by means of a spectrometer based on e.g. Fourier transform spectroscopy and/or Raman spectroscopy. Hence, according to embodiments of the present invention, the spectral information acquirer 102 may include a spectral imaging sensor and/or a spectrometer based on Fourier transform spectroscopy and/or Raman spectroscopy. However, other types of spectral information acquirers are possible and are within the scope of the present invention.

In general, during acquisition of spectral information of each of the plurality of objects 104, surfaces of the objects 104 are illuminated by at least one electromagnetic radiation source (not shown in Fig. 1), emitting electromagnetic radiation for example in the near infrared range of the electromagnetic spectrum, i.e. within a wavelength interval of about 1000-2500 nm. Other wavelength intervals are possible and are within the scope of the present invention. The at least one electromagnetic radiation source may for example be integrally arranged in the spectral information acquirer 102. However, the at least one electromagnetic radiation source may in alternative or in addition be (possibly partly) separately arranged with respect to the spectral information acquirer 102.

The electromagnetically radiated surfaces absorb and reflect electromagnetic radiation of different wavelengths to different extent depending on the material on which the electromagnetic radiation impinges. The electromagnetic radiation reflected from the objects 104, and possibly also electromagnetic radiation reflected from the surface that the objects 104 are situated or arranged on, is recorded or detected by the spectral information acquirer 102. The reflected electromagnetic radiation that is detected by the spectral information acquirer 102 may be converted into at least three-dimensional data sets (which may be referred to as data cubes) that include at least two spatial dimensions and at least one spectral dimension.

Without any loss of generality and solely for the purpose of illustrating principles of embodiments of the present invention, the following description mainly refers to the example where the spectral information acquirer 102 includes a spectral imaging sensor in the form of a hyperspectral imaging sensor or camera, adapted to capture at least one hyperspectral image of the plurality of objects 104, and where hyperspectral image analysis is used to obtain spectral information from the surface of the plurality of objects 104. In a hyperspectral image there is recorded a reflectance spectrum for each pixel in the image.

During acquisition of spectral information from the surface of the plurality of objects 104 by means of the spectral information acquirer 102, or spectral imaging sensor, the surface of the objects 104 and deviations and/or imperfections thereon (e.g. holes or recesses) and possibly also the background of the objects 104 (e.g. a surface on which the objects 104 are situated), are electromagnetically radiated and the reflected electromagnetic radiation is detected. The information collected during the acquisition of spectral information may for example be at least momentarily stored on a memory means, including for example persistent storage, which for example can be a magnetic memory, an optical memory, a solid state memory or a remotely mounted memory, or any combination thereof. According to one example, the hyperspectral imaging sensor or camera comprises or is constituted by a hyperspectral line scanner capable of sequential acquisition of lines whereby a multi-dimensional volume of information (such as a so called data cube) including at least two spatial dimensions and at least one spectral dimension is created. The spectral dimension is for example hyperspectral.

The spectral information may include a spectrum across a number of discrete wavelengths or wavelength bands, e.g. about 15-20 wavelengths or wavelength bands or more, e.g. about 100 wavelengths or wavelength bands or more. The number of wavelengths or wavelength bands does not necessarily represent a continuous spectral profile.

The spectral imaging sensor is not limited to a hyperspectral imaging sensor or camera. The spectral imaging sensor may be based on one or more of spectral imaging techniques such as multispectral imaging, hyperspectral imaging, full spectral imaging, imaging spectroscopy, and chemical imaging.

In accordance with the embodiment depicted in Fig. 1, the plurality of objects 104 are situated or arranged on a support 105 in the form of a surface on a member such as a tray or plate. Other types and/or forms of the member including the support 105 are possible, for example cups or similar containers, which may be at least partly transparent or translucent. In accordance with the embodiment depicted in Fig. 1, the support 105 may be situated or arranged on some means 107 for displacing or moving the support 105 with respect to the spectral information acquirer 102. In accordance with the embodiment depicted in Fig. 1, the means 107 comprises a conveyor belt or the like, displaceable in two opposing directions as indicated by the arrow A in Fig. 1, on which conveyor belt the support 105 can be positioned or arranged so that it can travel such that it at least momentarily can enter the field of view of the spectral information acquirer 102 (its field of view being indicated by the dashed lines indicated by reference numerals 109 in Fig. 1), thereby allowing for the spectral information acquirer 102 to acquire spectral information of each of a plurality of objects 104. After the spectral information acquirer 102 has acquired spectral information of each of a plurality of objects 104 on the support 105, the support 105 can then be displaced away from the spectral information acquirer 102, e.g. for further processing and/or analysis of the plurality of objects 104 elsewhere, and/or for allowing for other objects to enter the field of view 109 of the spectral information acquirer 102 for capturing at least one hyperspectral image of the other objects.

Identification of each object 104 in the (hyper-)spectral image and distinguishing of each object 104 in the image from other objects 104 in the image and the background in the image (i.e. the support 105 on which the objects 104 are situated) can be performed by means of (hyper-)spectral image analysis techniques. The distinguishing of objects 104 from the background in the image may for example be carried out using background subtraction techniques, e.g. by means of capturing an image of the support 105 without the objects 104 being arranged or situated on the support 105, and forming a difference image between images captured of the support 105 when the objects 104 are arranged or situated on the support 105 and when the objects 104 are not arranged or situated on the support 105.

With further reference to Fig. 1, the system 100 comprises a processing module 106, which is adapted to determine an estimate of a grouping of the plurality of objects 104 into at least one group according to extent of relatedness of the objects 104, based on the spectral information of each of the objects 104 as acquired by the spectral information acquirer 102.

To this end, the processing module 106 is adapted to acquire a set of data of each of the plurality of objects 104, wherein the set of data of each of the objects 104 is based on the spectral information of the object 104. The set of data of each of the objects 104 may for example be based on spectral information of at least one portion of the object 104, e.g. a surface portion of the object 104.

The set of data of each of the plurality of objects 104 may for example be received by the processing module 106 e.g. from the spectral information acquirer 102. Thus, the spectral information acquirer 102 may be configured so as to derive the set of data of each of the plurality of objects 104 based on the spectral information of the object 104.

According to another example, the processing module 106 may be adapted to receive spectral information of each of the plurality of objects 104 (from the spectral information acquirer 102) and derive the set of data of each of the plurality of objects 104 based on the spectral information of the object 104.

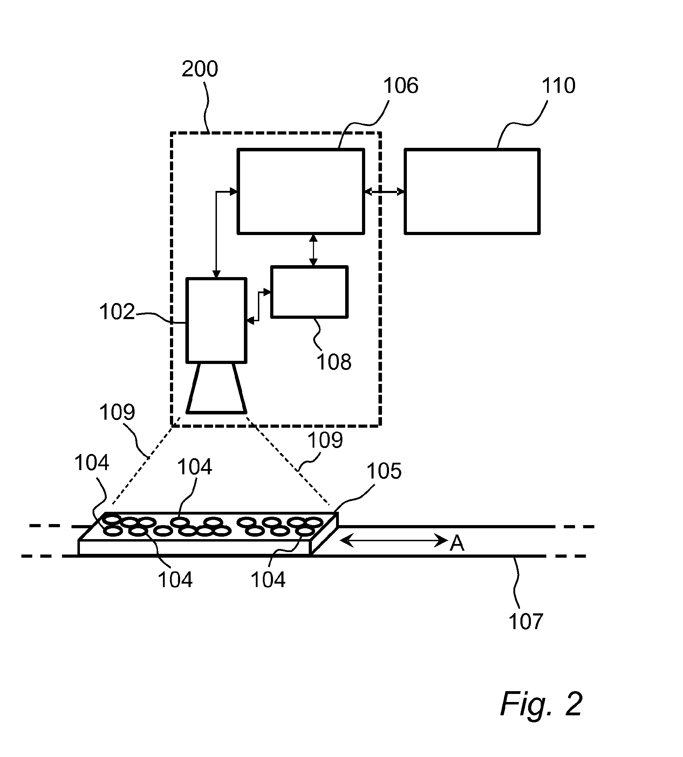

According to yet another example, which is illustrated in Fig. 2, the set of data of each of the plurality of objects 104 which is based on the spectral information of the object 104 may be derived by an entity other than the spectral information acquirer 102 or the processing module 106. Fig. 2 is a schematic view of, among other things, a system 200 in accordance with another embodiment of the present invention. In Figs. 1 and 2, the same reference numerals denote the same or similar elements or components throughout the views in Figs. 1 and 2. The embodiment of the present invention depicted in Fig. 2 differs from the embodiment of the present invention depicted in Fig. 1 in that according to the embodiment depicted in Fig. 2, the system 200 comprises a spectral information analyzer 108, which is adapted to derive the set of data of each of the plurality of objects 104 based on the spectral information of the object 104.

In general, connection or coupling between components in Figs. 1 and 2, respectively, which is indicated by double arrows may comprise a wired connection, a wireless connection, and/or an optical connection, etc., as known in the art. The double arrows between components in Figs. 1 and 2, respectively, generally indicate two-way communication or signaling between the respective components. However, two-way communication or signaling between the respective components may not be absolutely necessary (one-way communication may be sufficient) and hence the double arrows between components in Figs. 1 and 2, respectively, should not be interpreted in a limiting manner.

In Fig. 2, the direct connection or coupling between the spectral information acquirer 102 and the processing module 106 (i.e. not the connection therebetween via the spectral information analyzer 108) is optional.

With reference to Fig. 1 or Fig. 2, the deriving of the set of data of each of the objects 104 based on the spectral information of the object 104 may for example comprise utilizing a selected subset of the spectral information of the object 104, e.g., a plurality of average values of spectra for the object 104.

The plurality of average values of spectra for each of the objects 104 may for example be formed from averages of values of a selected number of pixels of the object 104 in a captured (hyper-)spectral image of the plurality of objects 104. Hence, the selected subset of the spectral information of each object 104 may for example be formed from pixel (spectrum) values of pixels in an image portion of a captured (hyper-)spectral image of the plurality of objects 104, in which image portion the respective object 104 is at least partly visually represented or depicted.

The selected subset of the spectral information of each object 104, or the plurality of average values of spectra for the object 104, may for example be selected based on a space-filling design. Examples of space-filling designs include, but are not limited to, fractional factorial designs, Latin hypercube sampling designs, and/or other optimal designs such as so called D-Optimal designs or the like.

According to an example embodiment of the present invention, each object 104 in a captured (hyper-)spectral image of the plurality of objects 104 is represented by a selected or predefined number, e.g. between 5-15, such as 10, of average values of pixel (spectrum) values of pixels in an image portion of the image in which respective object 104 is at least partly visually represented or depicted. The selection of pixels in an image portion of an image in which an object 104 is at least partly visually represented or depicted may for instance be based on an observed variation or distribution of a physical and/or chemical characteristic of the object 104, as derived from the information in the image portion. The total number of averages of pixel (spectrum) values for all of the objects 104 can then be reduced by means of a space-filling design in such a way so as to retain a sufficiently large variation in the average pixel (spectrum) values for each object 104. The remaining average pixel (spectrum) values for each object 104 after this reduction make out the set of data of each of the objects 104. Such a reduction in the amount of data may facilitate or even enable subsequent processing of the data for determining an estimate of a grouping of the plurality of objects 104 into at least one group according to extent of relatedness of the objects 104, as further described in the following.

With further reference to Fig. 1 or Fig. 2, the processing module 106 is adapted to, based on the set of data of each object 104, determine an initial estimate of the grouping of the plurality of objects 104.

The determination of the initial estimate of the grouping of the plurality of objects 104 may for example comprise estimating at least one characteristic of each of the objects 104 based on the set of data of the object 104. The at least one characteristic of each of the objects 104 may for example include a physical and/or chemical characteristic of the object 104. Based on the estimated characteristics, and/or variation of the estimated characteristics between different objects 104, values of a metric indicative of similarity, or dissimilarity, between respective ones of the plurality of objects 104 may be determined. Based on the estimated values of the metric, the initial estimate of the grouping of the plurality of objects 104 into at least one group may be determined.

In alternative or in addition, values of a metric indicative of similarity, or dissimilarity, between respective ones of the plurality of objects 104 may be determined based on for example size, shape and/or position of the respective objects 104 in a (hyper-)spectral image of the plurality of objects 104 captured by a spectral imaging sensor e.g. in the form of a hyperspectral imaging sensor or camera.

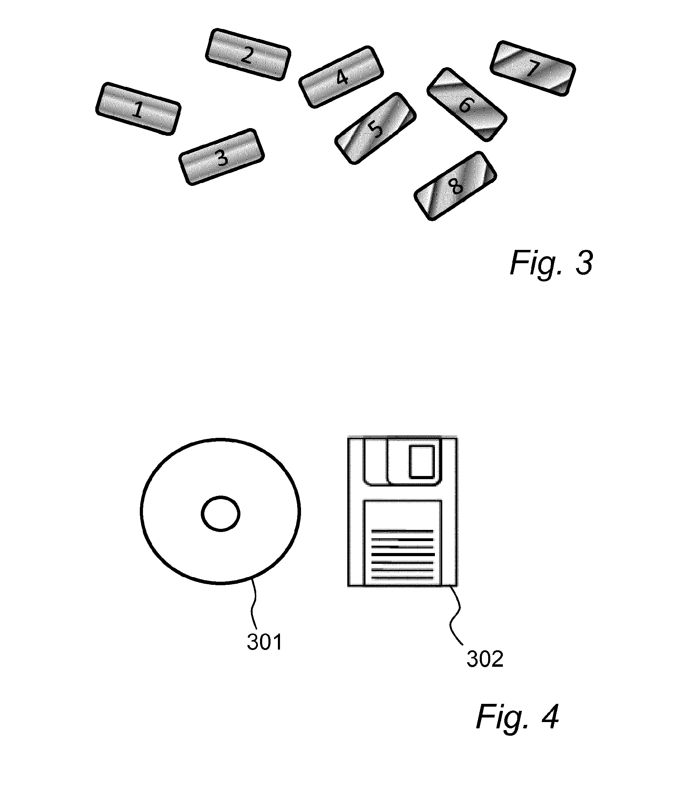

In Fig. 3 there is shown, for the purpose of illustration of principles of embodiments of the present invention, an example of an initial estimate of the grouping of eight objects, enumerated 1-8, into two groups according to extent of relatedness of the objects, where one of the groups include objects which are enumerated 1-4 and the other group includes objects which are enumerated 5-8, according to e.g. a metric indicative of similarity, or dissimilarity, between the objects as described above.

With further reference to Fig. 1 or Fig. 2, the processing module 106 is adapted to, starting from the initial estimate of the grouping of the plurality of objects 104, iteratively determine at least one further estimate of the grouping of the plurality of objects 104 (into at least one group). The iterative determination is preferably performed until a difference between a value of at least one fitness function, which is based on an estimate of the grouping of the plurality of objects 104, and a value of the at least one fitness function, which is based on a preceding estimate of the grouping of the plurality of objects 104, complies with a selected criterion for change in the value of the at least one fitness function.

The criterion for change in the value of the at least one fitness function may for example be that an absolute value of the change in the value of the at least one fitness function between preceding and succeeding iterations does not exceed a predefined value, which may depend e.g. on the fitness function which is used, the required accuracy in the determination of the estimate of a grouping of the plurality of objects 104 into at least one group according to extent of relatedness of the objects 104, etc.

The processing module 106 is further adapted to, in order to determine a new estimate of the grouping of the plurality of objects 104, determine a statistical relation between the set of data of each of the objects 104 and information relating to in which group each of the objects 104 is included for a preceding estimate of the grouping of the plurality of objects 104. Further, the processing module 106 is adapted to determine a measure of goodness of the determined statistical relation, wherein the value of the at least one fitness function is based on the determined measure. The new estimate of the grouping of the plurality of objects 104 can then be determined based on the said value of the at least one fitness function.

The determination of a statistical relation between the set of data of each of the objects 104 and information relating to in which group each of the objects 104 is included may for example be performed by means of a selected statistical analysis algorithm, which e.g. may include or be constituted by a regression analysis algorithm such as, but not limited to, a multivariate linear regression algorithm.

The determination of a measure of goodness of the determined statistical relation may for example include application of a statistical validation technique to the determined statistical relation. The statistical validation technique may for example include a cross-validation technique. The measure of goodness may hence be a so called cross-validation coefficient or value. According to an embodiment of the present invention, the value of the at least one fitness function is constituted by the measure of goodness and is e.g. a so called cross-validation coefficient or value.

The determination of a new estimate of the grouping of the plurality of objects 104 may for example be performed by means of an evolutionary algorithm or the like, such as a genetic algorithm or evolution strategy, and/or by means another heuristic optimization algorithm. In alternative or in addition, some other suitable optimization algorithm known in the art may be utilized for determining a new estimate of the grouping of the plurality of objects 104 based on the said value of the at least one fitness function.

Hence, according to an embodiment of the present invention, starting from a candidate solution, i.e. an initial estimate of the grouping of the plurality of objects 104, an optimization algorithm such as an evolutionary algorithm is utilized for generating a new, potential solution (or a plurality of new, potential solutions), i.e. further estimates of the grouping of the plurality of objects 104 (into at least one group), by means of comparing values of the at least one fitness function in preceding and succeeding iterations of the algorithm, thereby iteratively improving the final (converged) solution, i.e. the final estimate of the grouping of the plurality of objects 104 (into at least one group). For determination or generation of new, potential solutions, statistical relations between the set of data of each of the objects 104 and information relating to in which group each of the objects 104 is included are determined for each candidate solution (e.g. the solution(s) in each generation), and a measure of goodness or fit of the determined statistical relation is utilized as an objective function in the optimization algorithm.

As indicated in the foregoing, the above-mentioned iterative determination is preferably performed until a difference between values of the at least one fitness function between preceding and succeeding iterations complies with a selected criterion for change in the value of the at least one fitness function. Once a final (converged) solution, i.e. a final estimate of the grouping of the plurality of objects 104 (into at least one group), has been found or arrived at, a statistical relation between a set of data of each of the objects 104 and information relating to in which group each of the objects 104 is included may be determined for the final solution for the case where the set of data for each of the objects 104 includes all of the spectral information of the object 104, and not a selected subset of the spectral information of the object 104, e.g. for the case where the total number of averages of pixel (spectrum) values for all of the objects 104 have not been reduced by means of a space-filling design such as described in the foregoing. A measure of goodness of the thus determined statistical relation, or a value of the at least one fitness function based on the thus determined measure, can then be determined.

With further reference to Fig. 1 or Fig. 2, the final and/or the intermediate solutions in the iterative determination of an estimate of the grouping of the plurality of objects 104 may be visualized or indicated to a user for example by means of a visual display unit, or display screen, 110 coupled to the processing module 106. The final and/or the intermediate solutions in the iterative determination of the estimate of the grouping of the plurality of objects 104 may for example be visualized or indicated to the user by means of color-coding or some other way of marking or classifying the objects 104 as displayed on the visual display unit 110 according to in which group of the at least one group the objects 104 belong.

In alternative or in addition, the visual display unit 110 may be adapted to display (hyper-)spectral image(s) of the plurality of objects 104 captured by the spectral information acquirer 102, or spectral imaging sensor.

The processing module 106 may be adapted to compare a measure of goodness, or a value of the at least one fitness function based on the measure of goodness, of a statistical relation between a set of data of each of the objects 104 and information relating to in which group each of the objects 104 is included, as determined for the final and/or the intermediate (not yet converged) solutions, with predefined or selected intervals or ranges of values. For example with respect to an example where the final and/or an intermediate solution indicates that there are two groups, in case the measure of goodness or the value of the at least one fitness function determined for the solution is within a first interval, it may be indicated that the objects in the respective groups probably are associated with each other. In case the measure of goodness or the value of the at least one fitness function determined for the solution is within a second interval, it may be indicated that the objects in the respective groups probably are dissociated (i.e. that the objects in one of the groups are dissociated from the objects in the other group). In case the measure of goodness or the value of the at least one fitness function determined for the solution is within a fourth interval, it may be indicated that the objects in the respective groups are dissociated. The first, second and third intervals preferably are different. In case the final and/or an intermediate solution indicates that there is only one group, it may be indicated that all of the objects are associated with each other. The indications may be displayed or indicated to a user, e.g. by means of the visual display unit 110. The same or similar principles may apply for examples where the final and/or an intermediate solution indicates that there are three or more groups.

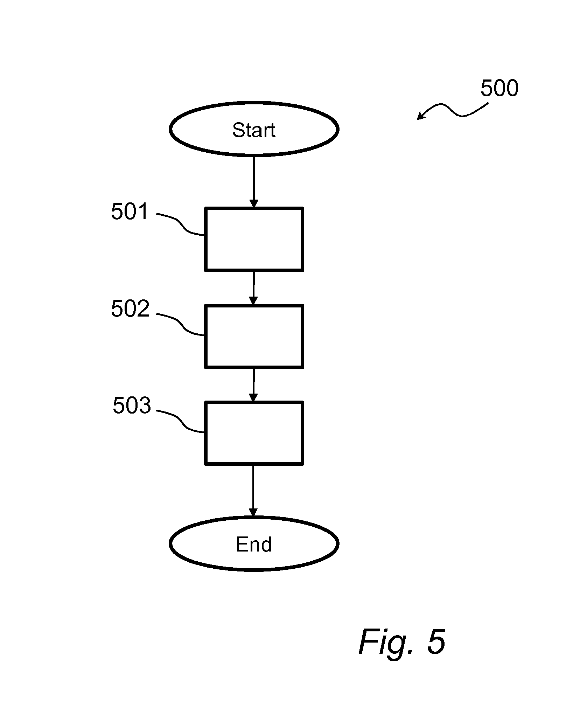

Referring now to Fig. 4, there is shown a schematic view of computer-readable means, or computer-readable digital storage mediums 301, 302, carrying computer program code, or a computer program product, according to embodiments of the present invention. The computer-readable means 301, 302 or computer program code is adapted to executed in a processing module 106 according to an embodiment of the present invention, e.g. as described above with reference to Fig. 1 or Fig. 2. The computer program product comprises computer-executable components for causing the processing module 106 to perform a method according to an embodiment of the present invention, e.g. the method 500 as described in the following with reference to Fig. 5, when the computer-executable components are executed on the processing module 106.

The computer-readable means 301, 302, or computer readable (digital) storage mediums, shown in Fig. 4 include a Digital Versatile Disc (DVD) 301 and a floppy disk 302. Although only two different types of computer-readable means 301, 302 are depicted in Fig. 4, the present invention encompasses embodiments employing any other suitable type of computer-readable means or computer-readable digital storage medium, such as, but not limited to, a nonvolatile memory, a hard disk drive, a Compact Disc (CD), a Flash memory, magnetic tape, a Universal Serial Bus (USB) memory device, a Zip drive, etc.

The processing module 106 may include or be constituted for example by any suitable central processing unit (CPU), integrated circuit, microcontroller, Digital Signal Processor (DSP), Application Specific Integrated Circuit (ASIC), Field-Programmable Gate Array (FPGA) circuit, etc., or any combination thereof. The processing module 106 may optionally be capable of executing software instructions stored in a computer program product e.g. in the form of a memory. The memory may for example be any combination of random access memory (RAM) and read-only memory (ROM). The memory may comprise persistent storage, which for example can be a magnetic memory, an optical memory, a solid state memory or a remotely mounted memory, or any combination thereof.

Referring now to Fig. 5, there is shown a schematic flow diagram of a method 500 according to an embodiment of the present invention. The method 500 is for determining an estimate of a grouping of a plurality of objects, or samples, into at least one group according to extent of relatedness of the objects.

The method 500 comprises acquiring or determining a set of data of each of the plurality of objects, 501, wherein the set of data of each of the objects is based on spectral information of the object. The spectral information of, or relating to, each object may for example include spectral information of at least one portion of the object, e.g. at least one surface portion of the object.

Based on the set of data of each object, an initial estimate of the grouping of the plurality of objects is determined, 502.

Then, starting from the initial estimate of the grouping of the plurality of objects, at least one further or additional estimate of the grouping of the plurality of objects is iteratively determined, 503, until a difference between a value of at least one fitness function based on an estimate of the grouping of the plurality of objects and a value of the at least one fitness function based on a preceding estimate of the grouping of the plurality of objects complies with a selected criterion for change in the value of the at least one fitness function. Hence, at least one additional estimate of the grouping of the plurality of objects in addition to the initial estimate of the grouping of the plurality of objects may be determined.

The method 500 may then end.

The iterative determination of at least one further estimate of the grouping of the plurality of objects may comprise, for a preceding estimate of the grouping of the plurality of objects, determining a statistical relation between the set of data of each of the objects and information relating to in which group each of the objects is included, determining a measure of goodness of the determined statistical relation, wherein the value of the at least one fitness function is based on the determined measure, and determining a new estimate of the grouping of the plurality of objects based on said value of the at least one fitness function.

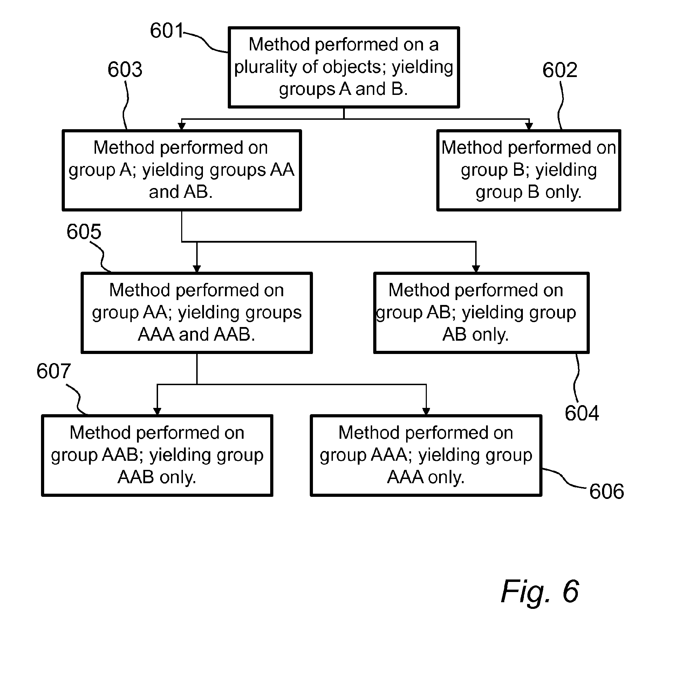

On a condition that an estimate of a grouping of the plurality of objects into at least two groups according to extent of relatedness of the objects has been determined on completion of the method 500, i.e. when a difference between value of the at least one fitness function based on preceding and successive estimates of the grouping of the plurality of objects complies with the selected criterion for change in the value of the at least one fitness function, the method 500 may be performed again, for the respective ones of the previously determined at least two groups. Thus, for each group of the previously determined at least two groups, and on a condition that the respective group includes at least two objects, the method 500 may be performed in order to determine an estimate of a grouping of the objects in the respective group into at least one group according to extent of relatedness of the objects. This may be carried out until the repeated carrying through of method 500 yields only a single group. This principle is illustrated in the schematic flowchart shown in Fig. 6, which relates to a non-limiting example for illustrating the principle.

With reference to Fig. 6, after carrying through a method according to an embodiment of the present invention, e.g. a method as described with reference to Fig. 5, the final solution indicates that there are two groups of objects A and B according to extent of relatedness of the objects, 601. The method is then performed again, for each of the groups A and B. For the group B, the method yields that there is only a single group B, 602, so no more evalutions or executions of the method on group B are performed. For the group A however, the method yields that there are two groups of objects AA and AB according to extent of relatedness of the objects, 603. The method is then performed again, for each of the groups AA and AB. For the group AB, the method yields that there is only a single group AB, 604, so no more evalutions or executions of the method on group AB are performed. For the group AA however, the method yields that there are two groups of objects AAA and AAB according to extent of relatedness of the objects, 605. The method is then performed again, for each of the groups AAA and AAB. Now, for both of the groups AAA and AAB, the method yields that there is only a single group AAA and AAB, respectively, 606 and 607, so no more evalutions or executions of the method on any of groups AAA and AAB are performed. Hence, the method may be performed repeatedly for each group as determined by preceding evaluations of the method, until the evaluation of the method yields that there is only a single group. The same or a similar principle may apply to examples where the final solution indicates that there are three or more groups of objects according to extent of relatedness of the objects.

While the present invention has been illustrated and described in detail in the appended drawings and the foregoing description, such illustration and description are to be considered illustrative or exemplifying and not restrictive; the present invention is not limited to the disclosed embodiments. Other variations to the disclosed embodiments can be understood and effected by those skilled in the art in practicing the claimed invention, from a study of the drawings, the disclosure, and the appended claims. The mere fact that certain measures are recited in mutually different dependent claims does not indicate that a combination of these measures cannot be used to advantage. Any reference signs in the claims should not be construed as limiting the scope.

## Claims

1. A method for determining an estimate of a grouping of a plurality of objects (104) into at least one group according to extent of relatedness of the objects, the method comprising:
acquiring a set of data of each of the plurality of objects, wherein the set of data of each of the objects is based on spectral information of the object;
based on the set of data of each object, determining an initial estimate of the grouping of the plurality of objects; and
starting from the initial estimate of the grouping of the plurality of objects, iteratively determining at least one further estimate of the grouping of the plurality of objects until a difference between a value of at least one fitness function based on an estimate of the grouping of the plurality of objects and a value of the at least one fitness function based on a preceding estimate of the grouping of the plurality of objects complies with a selected criterion for change in the value of the at least one fitness function;
wherein the iterative determination of at least one further estimate of the grouping of the plurality of objects comprises:
for a preceding estimate of the grouping of the plurality of objects, determining a statistical relation between the set of data of each of the objects and information relating to in which group each of the objects is included;
determining a measure of goodness of the determined statistical relation, wherein the value of the at least one fitness function is based on the determined measure; and
determining a new estimate of the grouping of the plurality of objects based on said value of the at least one fitness function.

2. A method according to claim 1, wherein the determination of a measure of goodness of the determined statistical relation includes applying a statistical validation technique to the determined statistical relation.

3. A method according to claim 2, wherein the statistical validation technique includes a cross-validation technique.

4. A method according to any one of claims 1-3, wherein the determination of the initial estimate of the grouping of the plurality of objects comprises:
estimating at least one characteristic of each of the objects based on the set of data of the object;
based on the estimated characteristics, estimating values of a metric indicative of similarity, or dissimilarity, between respective ones of the plurality of objects; and
based on the estimated values of the metric, determining the initial estimate of the grouping of the plurality of objects into at least one group.

5. A method according to claim 4, wherein the at least one characteristic of each of the objects includes a physical and/or chemical characteristic.

6. A method according to any one of claims 1-5, further comprising, on a condition that an estimate of a grouping of the plurality of objects into at least two groups according to extent of relatedness of the objects has been determined when a difference between values of the at least one fitness function based on preceding and successive estimates of the grouping of the plurality of objects complies with the selected criterion for change in the value of the at least one fitness function:
for each group of the at least two groups, and on a condition that the respective group includes at least two objects, performing a method according to any one of claims 1-5 for determining an estimate of a grouping of the objects in the respective group into at least one group according to extent of relatedness of the objects.

7. A processing module (106) adapted to determine an estimate of a grouping of a plurality of objects (104) into at least one group according to extent of relatedness of the objects, the processing module being adapted to:
acquire a set of data of each of the plurality of objects, wherein the set of data of each of the objects is based on spectral information of the object;
based on the set of data of each object, determine an initial estimate of the grouping of the plurality of objects; and
starting from the initial estimate of the grouping of the plurality of objects, iteratively determine at least one further estimate of the grouping of the plurality of objects;
wherein iterative determination is performed until a difference between a value of at least one fitness function based on an estimate of the grouping of the plurality of objects and a value of the at least one fitness function based on a preceding estimate of the grouping of the plurality of objects complies with a selected criterion for change in the value of the at least one fitness function;
wherein the processing module is adapted to, in order to determine a new estimate of the grouping of the plurality of objects:
determine a statistical relation between the set of data of each of the objects and information relating to in which group each of the objects is included for a preceding estimate of the grouping of the plurality of objects;
determine a measure of goodness of the determined statistical relation, wherein the value of the at least one fitness function is based on the determined measure; and
determine the new estimate of the grouping of the plurality of objects based on said value of the at least one fitness function.

8. A processing module according to claim 7, further adapted to:
receive spectral information of each of the plurality of objects; and
derive the set of data of each of the plurality of objects based on the spectral information of the object.

9. A processing module according to claim 8, further adapted to:
determine a selected subset of the spectral information of each of the plurality of objects; and
derive the set of data of each of the objects based on the spectral information of the object by means of the selected subset of spectral information determined for the object.

10. A processing module according to claim 9, further adapted to form a plurality of average values of spectra for each of the plurality of objects, wherein the subset of spectral information of each of the plurality of objects comprises the plurality of average values of spectra for the object.

11. A processing module according to claim 9 or 10, further adapted to determine the selected subset of the spectral information of each of the plurality of objects based on a space-filling design.

12. A system (100, 200) comprising:
a spectral information acquirer (102) adapted to acquire spectral information of each of a plurality of objects (104); and
a processing module (106) according to any one of claims 7-11 adapted to determine an estimate of a grouping of the plurality of objects into at least one group according to extent of relatedness of the objects, based on the spectral information of each of the objects.

13. A system according to claim 12, comprising a processing module according to claim 7 and further comprising:
a spectral information analyzer (108) adapted to derive a set of data of each of the plurality of objects based on the spectral information of the object;
wherein the processing module is adapted to determine the estimate of a grouping of a plurality of objects into at least one group according to extent of relatedness of the objects, based on the set of data of each of the plurality of objects.

14. A computer program product comprising computer-executable components for causing a processing module (106) according to any one of claims 7-11 to perform a method according to any one of claims 1-6 when the computer-executable components are executed on the processing module.

15. A computer-readable digital storage medium (301, 302) comprising a computer program product comprising computer-executable components adapted to, when executed on a processing module (106) according to any one of claims 7-11, cause the processing module to perform a method according to any one of claims 1-6.
